(19) Europäisches Patentamt
European Patent Office
Office européen des brevets

(11) **EP 3 074 439 B1**

(12) **EUROPÄISCHE PATENTSCHRIFT**

(45) Veröffentlichungstag und Bekanntmachung des Hinweises auf die Patenterteilung:
**11.10.2017 Patentblatt 2017/41**

(21) Anmeldenummer: **14802622.2**

(22) Anmeldetag: **19.11.2014**

(51) Int Cl.:
*C08L 25/14* (2006.01)      *C08F 285/00* (2006.01)

(86) Internationale Anmeldenummer:
**PCT/EP2014/075033**

(87) Internationale Veröffentlichungsnummer:
**WO 2015/078751 (04.06.2015 Gazette 2015/22)**

(54) **THERMOPLASTISCHE FORMMASSEN MIT ANGEPASSTER PFROPFHÜLLE**

THERMOPLASTIC MOULDING COMPOSITIONS WITH APPROPRIATELY DESIGNED GRAFT SHELL

MATIÈRES DE MOULAGE THERMOPLASTIQUES AVEC ENVELOPPE DE GREFFAGE ADAPTÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.11.2013 EP 13194463**

(43) Veröffentlichungstag der Anmeldung:
**05.10.2016 Patentblatt 2016/40**

(73) Patentinhaber: **INEOS Styrolution Group GmbH 60325 Frankfurt (DE)**

(72) Erfinder:
• **BÖCKMANN, Philipp**
**67098 Bad Dürkheim (DE)**
• **FISCHER, Wolfgang**
**69190 Walldorf (DE)**
• **STAAL, Maarten**
**67117 Limburgerhof (DE)**

(74) Vertreter: **Jacobi, Markus Alexander Isenbruck Bösl Hörschler LLP Eastsite One Seckenheimer Landstrasse 4 68163 Mannheim (DE)**

(56) Entgegenhaltungen:
**EP-A2- 0 139 971      DE-A1- 3 149 358**

EP 3 074 439 B1

EP 3 074 439 B1

**Beschreibung**

Die Erfindung betrifft eine thermoplastische Formmasse, die mindestens eine Copolymer-Komponente aus Styrol- und Nitril-Monomeren sowie mindestens ein Pfropf-Mischcopolymer auf Basis eines Acrylat-Kautschuks enthält, sowie daraus hergestellte thermoplastische Formteile sowie deren Verwendung.

Die Herstellung von Copolymeren aus Styrol- und Nitril-Monomeren (Hartkomponente) ist dem Fachmann bekannt. So wird die Herstellung einer Styrol-Acrylnitril-Copolymer-Matrix (SAN) in US 2011/0275763 und im Kunststoff-Handbuch (Vieweg-Daumiller, Band V Polystyrol, Carl-Hanser-Verlag, München, 1969, Seite 124, Zeile 12 ff.) beschrieben. Die Herstellung von Pfropf-Copolymeren wird in EP-A 0450485 und DE 1981 3149358 offenbart. Die Herstellung von Styrol-Acrylnitril-Copolymer-Formmassen mit mindestens einem Acrylat-Kautschuk (z.B. ®Luran S) wird in US 2011/0275763 beschrieben. WO 2007/142473 beschreibt Acrylat-Styrol-Acrylnitril-Copolymere (ASA) und deren Einsatz in thermoplastischen Zusammensetzungen.

Die Herstellung eines Pfropf-Copolymers erfolgt durch Pfropfung, üblicherweise in zwei Stufen, wodurch basierend auf einer Pfropfgrundlage (Kautschuk-Komponente) eine oder mehrere komplexe Pfropfhülle(n) gebildet werden. Im Allgemeinen wird zuerst das vinylaromatische Monomer (z.B. Styrol) in Gegenwart der zuvor hergestellten, großteiligen Pfropfgrundlage (Kautschuk-Komponente) polymerisiert. In der zweiten Stufe der Pfropfung kann dann eine Pfropf-Mischpolymerisation mit einem Gemisch von Monomeren erfolgen, enthaltend mindestens ein vinylaromatisches Monomer (z. B. Styrol) und mindestens ein polares, copolymerisierbares Monomer (z. B. Acrylnitril).

Der vorliegenden Erfindung liegt als eine Aufgabe zu Grunde, thermoplastische Formmassen mit verbesserten mechanischen Eigenschaften bereitzustellen, wobei diese Eigenschaften durch eine strukturell angepasste Pfropfhülle bei der Herstellung der Pfropf-Mischcopolymer-Komponente erreicht werden. Durch eine optimierte Verfahrensführung während der Pfropfungs-Polymerisation kann eine verbesserte Abstimmung des Pfropfhüllen-Aufbaus mit der eingesetzten Copolymer-Komponente, insbesondere mit einer SAN-Copolymer Matrix erreicht werden.

Die vorliegende Erfindung betrifft auch thermoplastische Zusammensetzungen, die mindestens ein Styrol-Copolymer A und mindestens eine Kautschuk-Komponente auf Basis von Acrylat-Styrol-Acrylnitril (ASA) Copolymeren B enthalten sowie ein besonderes Verfahren zur Herstellung der Formmassen mit verbesserter Schlagzähigkeit und weiteren vorteilhaften Eigenschaften. Thermoplastische Formmassen enthalten oftmals Pfropfkautschuke als Schlagzäh-Modifizierer, siehe DE-A 1260135 und DE-A 2311129. Enthält eine Zusammensetzung Styrol-Copolymere, insbesonder Styrol-Acrylnitril-Copolymere (SAN), so nimmt die Wirksamkeit der Pfropfcopolymere bezüglich ihrer schlagzähmodifizierenden Wirkung mit zunehmender Größe der Pfropfcopolymer-Partikel zu. Bei Einsatz von kleinteiligen Pfropfkautschuken besteht das Problem, dass die Zähigkeit der schlagzähmodifizierenden Massen stark von der Verarbeitungstemperatur abhängt. Die Eigenschaften von ASA-Pfropf-Copolymeren können dadurch verbessert werden, wenn die copolymere "Weichphase", die PfropfCopolymer-Komponente B, mehrere Pfropfhüllen (Pfropfauflagen) enthält, die beim Herstellungsverfahren der Komponente B nacheinander auf die Pfropfgrundlage (Pfropfbasis) aufgebracht werden. Schlagzähe, mehrphasige Emulsions-Copolymer-Formmassen vom ASA-Typ haben ein besonders ausgewogenes Eigenschaftsprofil, wenn die Acrylester-Weichphase z. B. auf dem Monomer Butylacrylat basiert, jedoch auch kleine Mengen eines weiteren Esters für die Herstellung der Pfropfgrundlage eingesetzt werden. EP-A 0 535 456 beschreibt eine thermoplastische Formmasse enthaltend ein Styrol/Acrylnitril-Copolymer und ein Pfropfcopolymer, wobei die Pfropfgrundlage einen cyclischen Ester, insbesondere DCPA (Acrylat des Tricyclodecenylalkohols), enthält. In DE-A 40 06 643 wird eine thermoplastische Formmasse aus einem Styrol/Acrylnitril-Copolymer und einem teilchenförmigen Pfropfcopolymer beschrieben, wobei als Pfropfgrundlage ein vernetzter Acrylat-Kautschuk mit einer Partikelgröße von 30 bis 1000 nm verwendet wird.

Gegenstand der vorliegenden Erfindung ist eine thermoplastische Formmasse, enthaltend die folgenden Komponenten (bzw. insbesondere bestehend aus diesen):

55 bis 85 Gew.-% mindestens eines Copolymers A, aufgebaut aus Styrol und/oder $\alpha$-Methylstyrol A1 sowie aus Acrylnitril A2,

10 bis 40 Gew.-% mindestens eines Pfropf-Mischcopolymers B aufgebaut aus:

B1: 50 bis 80, vorzugsweise 60 bis 70 Gew.-%, bezogen auf B, eines elastomeren, vernetzten Acrylester-Polymers B1 mit einem mittleren Teilchendurchmesser (Gewichtsmittel) im Bereich von 300 bis 700 nm als Pfropfgrundlage B1,

B2: einer ersten Pfropfhülle B2 aus 5 bis 30, vorzugsweise 10 bis 20 Gew.-%, bezogen auf B, eines vinylaromatischen Monomeren B21 und

B3: einer zweiten Pfropfhülle B3 aus 15 bis 40, vorzugsweise 20 bis 30 Gew.-%, bezogen auf B, einer Mischung aus vinylaromatischen Monomeren B31 und Nitril-Monomeren B32, wobei diese Monomeren B31 zu B32 in der Pfropfhülle B3 im Gewichtsverhältnis von 4 : 1 bis 3 : 2 vorliegen,

0 bis 30 Gew.-% mindestens eines kleinteiligen Pfropf-Mischcopolymers B' mit einem mittleren Teilchendurchmesser (Gewichtsmittel) von 80 bis 200 nm,

0 bis 5 Gew.-% an Zusatz- und/oder Hilfsstoffen C,

wobei sich der Gehalt an Nitril-Monomer (Baustein) in der Copolymer-Komponente A der thermoplastischen Formmasse und der Gehalt an Nitril-Monomer (Baustein) in der Pfropfhülle B3 um mindestens 8 Gew.-% unterscheiden.

Bevorzugt ist der Gehalt an Nitril-Monomer (z.B. Acrylnitril-Baustein) in der Copolymer-Komponente A der thermoplastischen Formmasse deutlich höher als der Gehalt an Nitril-Monomer (z.B. Acrylnitril-Baustein) in der Pfropfhülle B3. Gemäß der Erfindung unterscheidet sich der Gehalt um mindestens 8, häufig um mindestens 9, und oftmals um mindestens 10 Gew.-%.

Die Erfindung betrifft auch eine Formmasse, bei der das Pfropf-Mischcopolymer B ausgehend von einer Pfropfgrundlage B1 mit einem mittleren Teilchendurchmesser (Gewichtsmittel) im Bereich von 400 bis 600 nm, insbesondere von 440 bis 520 nm, hergestellt wird.

Die Erfindung betrifft auch eine Formmasse, bei der das Pfropf-Mischcopolymer B hergestellt wird aus:

60 bis 70 Gew.-% der Pfropfgrundlage B1 und

10 bis 20 Gew.-% der Pfropfhülle B2, vorzugsweise aus Styrol, sowie

20 bis 30 Gew.-% einer Pfropfhülle B3, bestehend aus B31 zu B32 im Gewichtsverhältnis von 78:22 bis 72:28.

Die Erfindung betrifft auch eine Formmasse, bei der das Pfropf-Mischcopolymer B ausgehend von einer Pfropfgrundlage B1 mit einem Butylacrylatgehalt von > 90 Gew.-%, insbesondere 92 bis 99 Gew.-%, bezogen auf B1, hergestellt wird. Häufig wird als weiteres Monomer für die Pfropfgrundlage B1 Tricyclodecenylacrylat eingesetzt, z. B. in einer Menge von < 10 Gew.-%, oftmals < 9 Gew.-%, insbesondere von 1 bis 8 Gew.-%.

Die Erfindung betrifft auch eine Formmasse, bei der das Pfropf-Mischcopolymer B hergestellt wird ausgehend von:

60 bis 70 Gew.-% der Pfropfgrundlage B1, 10 bis 20 Gew.-% Styrol B2 und 20 bis 30 Gew.-% einer Mischung B3 von Styrol und Acrylnitril im Gewichtsverhältnis 75:25.

Die Erfindung betrifft auch eine Formmasse, bei der das mindestens eine Copolymer A aus Styrol A1 und Acrylnitril A2 im Gewichtsverhältnis von etwa 2:1, insbesondere 67:33, aufgebaut ist, und wobei die Formmasse die Komponenten A und B in einem Gewichtsverhältnis von 85:15 bis 60:35 enthält.

Die Erfindung betrifft auch eine Formmasse, bei der diese enthält: 55 bis 85 Gew.-%, oftmals 65 bis 80 Gew.-% an Copolymeren A, 10 bis 40 Gew.-%, oftmals 10 bis 35 Gew.-% an Pfropf-Mischcopolymer B sowie 0,2 bis 5 Gew.-% an üblichen Zusatz- und/oder Hilfsstoffen C. In einer weiteren Ausführungsform enthält die Formmasse neben 10 bis 20 Gew.-% der Pfropf-Mischcopolymer B auch 10 bis 30 Gew.-%, oftmals 10 bis 20 Gew.-% einer weiteren ASA-Pfropfcopolymer-Komponente B', wobei diese Komponente B' auf einer Acrylat-Pfropfgrundlage B1 nur eine einfache Pfropfhülle aus Styrol und/oder Acrylnitril aufweist.

Die Erfindung betrifft auch eine Formmasse, bei der die Teilchengrößenverteilung der Pfropf-Grundlage B1 eng ist (vorzugsweise Quotient Q von 0,14 bis 0,2) und auch die Teilchengrößenverteilung des Pfropf-Mischcopolymers B eng ist (vorzugsweise Q von 0,14 bis 0,2).

Die Erfindung betrifft auch eine Formmasse, bei der das Pfropf-Mischcopolymer B eine erste Pfropfhülle B2 aus Styrol und eine zweite Pfropfhülle B3 aus Styrol und Acrylnitril aufweist, wobei der Acrylnitril-Gehalt der Pfropfhülle B3 von 15 bis 25 Gew.-%, oftmals 18 bis 23 Gew.-%, in einigen Fällen von 19 bis 22,5 Gew.-%, (bezogen auf B3) beträgt.

Die Erfindung betrifft auch eine Formmasse, bei der das mit zwei Pfropfhüllen (B2 und B3) ausgestattete Pfropf-Mischcopolymer B einen mittleren Teilchendurchmesser (Gewichtsmittel) im Bereich von 400 bis 600 nm, insbesondere von 500 bis 580 nm aufweist.

Gegenstand der Erfindung ist auch ein Verfahren zur Herstellung einer thermoplastischen Styrol-Copolymer Formmasse, erhältlich durch Vermischen der Bestandteile bzw. Komponenten der zuvor beschriebenen Formmasse.

Ein wesentlicher Gegenstand der Erfindung ist auch ein Verfahren zur Herstellung einer thermoplastischen Styrol-Copolymer Formmasse (insbesondere der oben beschriebenen Formmassen), dadurch gekennzeichnet, dass es folgende Verfahrensschritte beinhaltet:

a) ein Pfropf-Mischcopolymer B wird herstellt, in dem man folgende Schritte anwendet:

a1) als Pfropfgrundlage B1 wird ein elastomeres, vernetztes Acrylester-Polymer mit einem mittleren Teilchendurchmesser (Gewichtsmittel) im Bereich von 300 bis 700 nm eingesetzt,

a2) auf diese Pfropfgrundlage B1 wird durch Polymerisation eine erste Pfropfhülle B2 aus einem vinylaromatischen Monomeren B21 aufgebracht, wobei diese Reaktion durch kontinuierlichen Zusatz des Monomeren B21 bei einer Temperatur von unter 65° C erfolgt, und wobei dieser Schritt in einem Zeitraum von 45 bis 90 Minuten erfolgt,

a3) auf dem aus Schritt a2) erhaltenen Copolymer-Produkt wird durch Polymerisation eine zweite Pfropfhülle B3 aus einer Mischung aus vinylaromatischen Monomeren B31 und Nitril-Monomeren B32 aufgebracht, wobei die Monomeren B31 und B32 in der Pfropfhülle B3 in etwa im Gewichtsverhältnis von 3:1 vorliegen, wobei diese Reaktion durch kontinuierlichen Zusatz des Monomeren-Gemisches bei einer Temperatur von 60 bis 68° C erfolgt, und wobei dieser Schritt in einem Zeitraum von 120 bis 240 Minuten erfolgt,

b) das gewonnene Pfropf-Mischcopolymer B wird durch Fällung abgetrennt und einem Trocknungsschritt unterzogen,

c) das erhaltene Pfropf-Mischcopolymer B wird in einer Menge von 10 bis 40 Gew.-% mit 55 bis 85 Gew.-% mindestens eines Copolymers A, aufgebaut aus Styrol und/oder $\alpha$-Methylstyrol A1 sowie aus Acrylnitril A2, wobei A1 und A2 im Copolymer A in etwa im Gewichtsverhältnis von 2:1 vorliegen, sowie ggf. mit 0 bis 5 Gew.-% an weiteren Zusatz- und/oder Hilfsstoffen C vermischt.

Ein weiterer Aspekt der Erfindung ist, dass das in Schritt a2) erhaltene Copolymer-Produkt noch 0,1 bis 10 Gew.-% an Styrolmonomer enthält, welches für die Polymerisation für die zweite Pfropfhülle B3 zur Verfügung steht und somit den Anteil an Styrol in der dann eingesetzten Mischung (aus Styrol B31 und Acrylnitril B32) erhöht.

Die Erfindung betrifft auch ein Verfahren zur Herstellung einer thermoplastische Styrol-Copolymer Formmasse, bei dem das Pfropf-Mischcopolymer B ausgehend von einer Pfropfgrundlage B1 aus Butylacrylat und Tricyclodecenylacrylat mit einem mittleren Teilchendurchmesser (Gewichtsmittel) im Bereich von 440 bis 520 nm hergestellt wird, und die Pfropfhülle B2 aus Styrol besteht und die Pfropfhülle B3 aus Styrol und Acrylnitril im Gewichtsverhältnis von 76:24 bis 74:26 besteht, und das Copolymer A aufgebaut aus Styrol und Acrylnitril im Gewichtsverhältnis von etwa 2:1, insbesondere von 67:33.

Ein Gegenstand der Erfindung ist auch die Verwendung der o.g. Formmasse zur Herstellung von Formkörpern, Folien oder Beschichtungen. Die Erfindung betrifft ferner Formkörpern, Folien und Beschichtungen hergestellt aus einer Formmasse, wie sie oben beschrieben wurde bzw. wie sie nach dem beschriebenen Verfahren erhältlich ist.

Die genannten thermoplastischen Copolymer-Formmassen können auch mehrere SAN-Komponenten A und mehrere Pfropfcopolymer-Komponenten B enthalten. Sie weisen verbesserte mechanische Eigenschaften, auch nach Bewitterung auf.

Oftmals haben die Pfropf-Mischcopolymere B eine mittlere Teilchengröße von 440-520 nm. Die vorliegende Erfindung betrifft die Bereitstellung von verbesserten thermoplastischen Copolymer-Formmassen, enthaltend mindestens zwei verschiedene Pfropf-Mischcopolymere B und B'. Dabei können zwei getrennt hergestellte Pfropf-Mischcopolymere B und B' eingesetzt werden, die jeweils auf einer vernetzten Acrylester-Pfropfgrundlage B1 basieren. Während B jedoch zwei Pfropfhüllen aufweist, wird als B' ein übliches Pfropf-Mischcopolymer mit nur einer Hülle aus Acrylnitril/Styrol eingesetzt.

Die Zusammensetzungen bzw. Formmassen enthalten vorzugsweise die folgenden Komponenten:

- SAN-Copolymer A, aufgebaut aus z. B. 67 Gew.-% Styrol, 33 Gew.-% Acrylnitril,

- Pfropf-Mischcopolymer B mit einer mittleren Teilchengröße von 500 bis 580 nm,

- Hilfsstoffe und/oder Zusatzstoffe C.

Zusammensetzungen bzw. Formmassen enthalten in einer Ausführungsform der Erfindung auch noch die folgende Komponente:

- Pfropf-Mischcopolymer B' mit einer mittleren Teilchengröße von 80 bis 200 nm.

Das Gewichtsverhältnis von Komponente A zu Komponente B beträgt oftmals von 8:1 bis 2:1. Die jeweiligen Gewichtsverhältnisse betragen bei den Polymer-Zusammensetzungen oftmals:

a) von A und B oftmals etwa 70:30;

b) von A, B und B' oftmals von etwa 70:10:20.

Die Erfindung betrifft ferner ein Verfahren zur Herstellung einer thermoplastische Copolymer-Zusammensetzung, wie oben beschrieben, bei dem man mindestens ein SAN-Copolymer A, sowie mindestens ein Pfropf-Mischcopolymer B mit definierter Pfropfbasis-Pfropfhülle-Morphologie, und ggf. B' herstellt, und diese Komponenten ggf. mit den weiteren Hilfsstoffen und/oder Zusatzstoffen C vermischt.

Die Pfropfbasis B1 besteht aus einem Acrylester-Polymer Material mit einer Glasübergangstemperatur Tg von kleiner 0°C, häufig aufgebaut aus > 90 bis 99 Gew.-% mindestens eines C2-C4-Alkylacrylats, 0,5 bis < 10 Gew.-% eines weiteren Acrylats, z. B. Tricyclodecenylacrylat. Das weitere Acrylat ist dabei kein C2-C4-Alkylacrylat, sondern ein anderes Acrylat, wie z.B. das genannte Tricyclodecenylacrylat.

Die Erfindung betrifft auch Formkörper, Folien, Fasern oder Beschichtungen, enthaltend eine thermoplastische Formmasse, wie oben beschrieben, wobei diese auch für Außenanwendungen, z. B. bei KFZ-Teilen, geeignet sind. Die einzelnen Komponenten der Zusammensetzungen werden nachfolgend weiter charakterisiert.

## Komponente A

Die Komponente A wird in Mengen von 50 bis 85 Gew.-%, bevorzugt 55 bis 80 Gew.-% eingesetzt. Als Haupt-Monomere eignen sich Styrol und Styrol-Derivate wie $\alpha$-Methylstyrol und kernalkylierte Styrole, wie p-Methylstyrol. Bevorzugt werden Styrol, $\alpha$-Methylstyrol, insbesondere jedoch Styrol eingesetzt. Als Neben-Monomere werden vorzugsweise Acrylnitril und/oder Methacrylnitril eingesetzt, bevorzugt ist Acrylnitril. Der Anteil an dem Haupt-Monomer (wie Styrol) in dem Copolymer A beträgt im Allgemeinen 65 bis 75 Gew.-%, vorzugsweise 66 bis 68 Gew.-%, oftmals etwa 67 Gew.-%. Der Anteil an dem Neben-Monomer in dem Copolymer A beträgt im Allgemeinen 25 bis 35 Gew.-%, vorzugsweise 32 bis 34 Gew.-%, oftmals etwa 33 Gew.-%.

Bevorzugt ist A ein Copolymer von Styrol und Acrylnitril. Dieses SAN-Copolymer ist oftmals hergestellt mit (etwa) 67 Gew.-% Styrol und (etwa) 33 Gew.-% AN. Das SAN-Copolymer A hat oftmals eine Molmasse im Bereich (Mw) von 120.000 bis 180.000 g/Mol, gemessen nach üblichen Methoden, die dem Fachmann bekannt sind, wie z.B. Gelpermeationschromatographie (GPC). Die Herstellung von A kann nach allgemein bekannten Methoden (DE-A 31 49 358 und DE-A 32 27 555) durchgeführt werden, beispielsweise durch allgemein bekannte Copolymerisation in Masse, Lösung, Suspension oder wässriger Emulsion bei üblichen Temperaturen in bekannten Apparaturen.

## Komponente B

Die Komponente B wird in der Regel in Mengen von 10 bis 40 Gew.-%, bei Verwendung mehrerer Kautschuke bevorzugt 10 bis 30 Gew.-% eingesetzt.

Als Monomere für die Herstellung der kautschukartigen Pfropfbasis kommen im Allgemeinen (Meth)acrylsäurealkylester mit einem geradkettigen oder verzweigten Alkylrest mit 2 bis 8 Kohlenstoffatomen, bevorzugt 2 bis 4 Kohlenstoffatomen, in Betracht. Bevorzugt sind Acrylsäurealkylester mit einem geradkettigen oder verzweigten Alkylrest mit bevorzugt 2 bis 8 Kohlenstoffatomen, besonders bevorzugt 2 bis 4 Kohlenstoffatomen, insbesondere Acrylsäure-n-butylester. Die (Meth)acrylsäurealkylester können bei der Herstellung der Pfropfgrundlage einzeln oder in Mischung eingesetzt werden.

Weiterhin enthält die kautschukartige Pfropfgrundlage mindestens einen Vernetzer. Beispielsweise werden 0,1 bis 2,0 Gew.-% Allylmethacrylat eingesetzt und 0,5 bis 2,5 Gew.-%, oftmals 1 bis 2,5 Gew.-% des Acrylsäureester des Tricyclodecenylalkohols (Dicyclopentadienylacrylat; DCPA). Es können zwei Vernetzer eingesetzt werden, vorzugsweise wird jedoch nur einer eingesetzt. Oftmals wird 1 bis 2,5 Gew.-%, insbesondere 1,5 bis 2,1 Gew.-% DCPA (bezogen auf Komponente B) eingesetzt.

Darüber hinaus kann die kautschukartige Pfropfgrundlage bis zu 18 Gew % an weiteren, copolymerisierbaren Monomeren enthalten. Oftmals sind jedoch keine weiteren Vernetzer vorhanden. Geeignete Monomere sind beispielsweise Divinylbenzol, Diallylmaleat, Diallylfumarat und/oder Diallylphthalat, Tri-Allylcyanurat.

Zur Herstellung der Pfropfhülle B1 geeignete Monomere sind vinylaromatische Monomere wie Styrol und/oder Styrolderivate, zum Beispiel Alkylstyrol, vorzugsweise $\alpha$-Methylstyrol, und kernalkylierte Styrole, wie p-Methylstyrol und/oder tert-Butylstyrol. Bevorzugt wird Styrol verwendet.

Beispiele für die in Pfropfhülle B2 zusätzlich zu den vinylaromatische Monomeren einsetzbare polare, copolymerisierbare ungesättigte Monomere sind Acrylnitril und Methacrylnitril. Als mögliche weitere copolymerisierbare Monomere können beispielsweise folgende Verbindungen Verwendung finden: Acrylsäure, Methacrylsäure, Maleinsäureanhydrid, Methylmethacrylat, Ethylmethacrylat, Phenylmaleinimid, Acrylamid und Vinylmethylether. Bevorzugt ist Methylmethacrylat und/oder Maleinsäureanhydrid.

Bevorzugt ist die Pfropfhülle B2 ein Copolymer von Styrol und Acrylnitril.

## Komponente B'

Die Pfropf-Mischcopolymer-Komponente B' wird in Mengen von 0 bis 30 Gew.-%, bevorzugt 10 bis 30 Gew.-%, bei Verwendung mehrerer Kautschuke bevorzugt von 10 bis 20 Gew.-% in den Formmassen eingesetzt.

Als Monomere für die Pfropfbasis werden die vorstehend für die Pfropfgrundlage B1 beschriebenen, entsprechenden Verbindungen (insbesondere Butylacrylat als Hauptkomponente) verwendet. Als Monomere für die Pfropfhülle B2 werden ebenfalls die vorstehend beschriebenen Verbindungen (insbesondere Styrol und Acrylnitril) verwendet.

Die Herstellung von Pfropf-Copolymeren aus einer elastomeren ASA-Pfropfgrundlage und einer Pfropfhülle ist allgemein bekannt (siehe DE 4006643; DE 4131729). Die Herstellung von Pfropf-Mischcopolymeren kann durch Pfropfung in mehreren Stufen erfolgen (DE-A 3227555 und DE-A 31 49 358).

Für das Herstellungsverfahren der Pfropfcopolymeren B wird im Allgemeinen zunächst das als Pfropfgrundlage dienende kautschukartige Acrylsäureester-Polymer B1 z. B. durch Emulsionspolymerisation hergestellt, indem man beispielsweise Butylacrylat und den zweiten Ester (Tricyclodecenylacrylat) beispielsweise in wässriger Emulsion mit z. B. Kaliumpersulfat bei Temperaturen zwischen 20° und 100°C, vorzugsweise zwischen 50 und 80°C polymerisiert. Auf diesem dabei entstehenden Polyacrylsäureester-Latex B1 kann dann zunächst in einer ersten Pfropfreaktion z. B. Styrol (als erste Pfropfhülle B2) und danach in einer weiteren Polymerisation ein Gemisch von Styrol und Acrylnitril (als zweite Pfropfhülle B3) aufgebracht werden, wobei die Pfropfmischpolymerisation ebenfalls vorzugsweise in wässriger Emulsion durchgeführt wird.

Die Herstellung der Pfropf-Mischcopolymeren B erfolgt bevorzugt in zwei Stufen, wobei die Zwischenprodukte abgetrennt und gelagert, aber auch gleich weiterverwendet werden können. In der ersten Stufe wird oftmals eine erste Pfropfhülle nur aus Styrol auf der Pfropfgrundlage B1 aufgebracht. In der zweiten Stufe kann dann die Pfropfmischpolymerisation mit einem Gemisch enthaltend mindestens ein vinylaromatisches Monomer (Styrol) und Acrylnitril durchgeführt werden.

Die eingesetzten und in der erfindungsgemäßen Polymermischung enthaltenen Mengen der verschiedenen Komponenten sind bereits eingangs beschrieben worden.

## Komponenten C

Des Weiteren können bei der Polymerisation die üblichen Hilfsstoffe Verwendung finden, beispielsweise in Mengen von 0 bis 5 Gew.-%, oftmals 0,5 bis 5 Gew.-%, oft auch 0,5 bis 2,5 Gew.-%. Zu nennen sind beispielsweise Emulgatoren, wie Alkalisalze von Alkyl- oder Alkylarylsulfonsäuren, Alkylsulfate, Fettalkoholsulfonate, Salze höherer Fettsäuren mit 10 bis 30 Kohlenstoffatomen, oder Harzseifen. Auch werden Komponenten eingesetzt wie: Polymerisationsinitiatoren wie z.B. übliche Persulfate, beispielsweise Kaliumpersulfat, oder bekannte Redox-Systeme, Polymerisationshilfsstoffe wie z.B. übliche Puffersubstanzen, durch welche pH-Werte von vorzugsweise 6 bis 9 eingestellt werden, z.B. Natriumbicarbonat und/oder Natriumpyrophosphat, und/oder Molekulargewichtsregler, beispielsweise Mercaptane, Terpinole und/oder dimeres $\alpha$-Methylstyrol. Die Molekulargewichtsregler werden oft in einer Menge von 0 bis 3 Gew.-%, bezogen auf das Gewicht der Reaktionsmischung, eingesetzt.

Zur Herstellung der erfindungsgemäßen Polymermischung werden die vorbeschriebenen teilchenförmigen Pfropfpolymere B und ggf. B' in die Hartkomponente, d.h. das SAN-Copolymer A, eingearbeitet. Die Einarbeitung kann zum Beispiel dadurch erfolgen, dass das bzw. die teilchenförmigen Pfropfpolymere durch Zugabe eines Elektrolyten aus der Emulsion isoliert (gefällt) wird und anschließend, gegebenenfalls nach Trocknung, durch gemeinsames Extrudieren, Kneten oder Walzen mit der Hartkomponente A vermischt wird. Bei der Herstellung dieser Formmasse können auch die nachstehenden Zusatzstoffe zugesetzt werden.

Die üblichen Zusatzstoffe C können Verwendung in den Formmassen finden, beispielsweise in Mengen von 0 bis 5 Gew.-%, oftmals von 0,5 bis 5 Gew.-%, oft auch 0,5 bis 2,5 Gew.-%. Als Zusatzstoffe können beispielsweise Weichmacher, Antistatika, Lichtschutzmittel, Gleitmittel, Treibmittel, Haftvermittler, gegebenenfalls weitere verträgliche thermoplastische Kunststoffe, Füllstoffe, oberflächenaktive Substanzen, Flammschutzmittel, Farbstoffe und Pigmente, Stabilisatoren gegen Oxidation, Hydrolyse, Licht (UV), Hitze oder Verfärbung und/oder Verstärkungsmittel enthalten sein. Als Lichtschutzmittel können alle üblichen Lichtschutzmittel eingesetzt werden, beispielsweise Verbindungen auf Basis von Benzophenon, Benztriazol, Zimtsäure, organischen Phosphiten und Phosphoniten sowie sterisch gehinderte Amine.

Als Gleitmittel kommen beispielsweise Kohlenwasserstoffe wie Öle, Paraffine, PE-Wachse, PP-Wachse, Fettalkohole mit 6 bis 20 Kohlenstoffatomen, Ketone, Carbonsäuren wie Fettsäuren, Montansäure oder oxidiertes PE-Wachs, Carbonsäureamide sowie Carbonsäureester, z.B. mit den Alkoholen, Ethanol, Fettalkoholen, Glycerin, Ethandiol, Pentaerythrit und langkettigen Carbonsäuren als Säurekomponente in Betracht.

Als Stabilisatoren können übliche Antioxidantien, beispielsweise phenolische Antioxidantien, z.B. alkylierte Monophenole, Ester und/oder Amide der b-(3,5-Di-tertiärbutyl-4-hydroxyphenyl)-propionsäure und/oder Benztriazole eingesetzt werden. Beispielhaft sind mögliche Antioxidantien in EP-A 698637 und EP-A 669367 erwähnt. Konkret kann man als phenolische Antioxidantien 2,6-Di-tertiärbutyl-4-methylphenol, Pentaerythrityl-tetrakis-[3-(3,5-ditertiärbutyl-4-hydroxyphenyl)-propionat und N,N'-Di-(3,5-ditertiärbutyl-4-hydroxyphenyl-propionyl)-hexamethylendiamin erwähnen. Die genannten Stabilisatoren können einzeln oder in Mischungen verwendet werden.

Weitere verträgliche thermoplastische Kunststoffe für Polymer-Blends können beispielsweise Polyester (z.B. Polyethylenterephthalat, Polybutylenterephthalat), PMMA, Polycarbonat, Polyamid, Polyoxymethylen, Polystyrol, Polyethylen, Polypropylen, Polyvinylchlorid sein.

Diese Hilfs- und/oder Zusatzstoffe können sowohl bereits bei der Herstellung der thermoplastischen Komponente A eingesetzt werden, als auch der Komponente B und/oder B' bei der Herstellung der Mischung zugesetzt werden. Weiterer Gegenstand der Erfindung sind Formteile hergestellt aus den erfindungsgemäßen Polymer-Formmassen. Die erfindungsgemäßen Formmassen können beispielsweise pelletiert oder granuliert, oder nach allgemein bekannten Verfahren, beispielsweise durch Extrusion, Spritzguss, Blasformen oder Kalandierung zu Formteilen aller Art, wie Kabelummantelungen, Folien, Schläuchen, Fasern, Profilen, Schuhschalen, technischen Formteilen (wie KFZ-Teilen), Gebrauchsartikeln und Beschichtungen, verarbeitet werden.

Die Beispiele, die Figuren und die Patentansprüche dienen der näheren Beschreibung der Erfindung.

Beispiele

Die Charakterisierung der erfindungsgemäß hergestellten thermoplastischen Zusammensetzungen bzw. Formmassen kann durch Messung verschiedener Parameter erfolgen.

a) Die Charpy-Kerbschlagzähigkeit wird gemessen nach ISO 179/1 eA bei 23°C, sowie bei -30°C.

b) Die Charpy-Schlagzähigkeit wird gemessen nach ISO 179/1 eU bei -30°C.

c) Die mittlere Teilchengröße kann mit einer Ultrazentrifuge gemäß der Methode von W. Scholtan and H. Lange, Kolloid-Z. and Z. Polymere 250 (1972), 782-796 bestimmt werden. Die Ultrazentrifugen-Messung ergibt die integrale Massenverteilung der Teilchen einer Probe. Der mittlere Teilchendurchmesser $d_{50}$ ist definiert als der Durchmesser, bei dem 50 Gew.-% der Teilchen kleinere und 50 Gew.-% der Teilchen größere Durchmesser haben.

Beispiel 1 (Herstellung der Pfropfgrundlage B1)

16 Teile Butylacrylat (BA) und 0,4 Teile Tricyclodecenylacrylat werden in 150 Teilen Wasser unter Zusatz von einem Teil des Natriumsalzes einer $C_{12}$-$C_{18}$-Paraffinsulfonsäure, 0,3 Teilen Kaliumpersulfat, 0,3 Teilen Natriumhydrogencarbonat und 0,15 Teilen Natriumphosphat unter Rühren auf 60°C erwärmt. 10 Minuten nach dem Anspringen der Polymerisationsreaktion wurden innerhalb von 3 Stunden eine Mischung aus 82 Teilen Butylacrylat und 1,6 Teilen Tricyclodecenylacrylat zugegeben. Nach Beendigung der Monomer-Zugabe ließ man noch eine Stunde nachreagieren.

Der erhaltene Latex des vernetzten Butylacrylat-Polymers hatte einen Feststoffgehalt von 40 Gew.-%. Die mittlere Teilchengröße (Gewichtsmittel) wurde zu 79 nm ermittelt. Die Teilchengrößenverteilung war eng (Quotient Q = 0,20).

Beispiel 2 (Herstellung des Pfropfmischcopolymers B in 2 stufiger Pfropfreaktion)

a) Zu einer Vorlage aus 2,5 Teilen des vorstehend beschriebenen Latex aus Beispiel 1 mit vernetzten Butylacrylat-Polymer wurden nach Zugabe von 50 Teilen Wasser und 0,1 Teilen Kaliumpersulfat im Verlauf von 3 Stunden einerseits eine Mischung aus 49 Teilen Butylacrylat und 1 Teil Tricyclodecenylacrylat und andererseits eine Lösung von 0,5 Teilen des Natriumsalzes einer $C_{12}$-$C_{18}$-Paraffinsulfonsäure in 25 Teilen Wasser bei 60°C zugegeben. Nach Zulaufende wurde 2 Stunden nachpolymerisiert. Der erhaltene Latex des vernetzten Butylacrylat-Polymers hatte einen Feststoffgehalt von 40%. Die mittlere Teilchengröße (Gewichtsmittel des Latex) wurde zu 450 nm ermittelt. Die Teilchengrößenverteilung war eng (Q = 0,15).

b) 150 Teile dieses Latex mit vernetztem Butylacrylat-Polymer wurden mit 60 Teilen Wasser, 0,03 Teilen Kaliumpersulfat und 0,05 Teilen Lauroylperoxid gemischt. Unter Rühren wurden bei 61 °C 20 Teile Styrol innerhalb 1h zu dosiert und im Anschluss für 25 Minuten nachpolymerisiert, ebenfalls bei 61 °C. Die bei der Pfropfmisch-Polymerisation erhaltene Dispersion wurde dann mit 20 Teilen eines Gemisches aus Styrol und Acrylnitril (im Verhältnis 75:25) weitere 4 Stunden polymerisiert.

Das Reaktionsprodukt wurde mit einer Calciumchlorid-Lösung bei 95°C aus der Dispersion ausgefällt, abgetrennt, mit Wasser gewaschen und im warmen Luftstrom getrocknet. Der Pfropfgrad des erhaltenen Pfropfmischpolymers B wurde zu 40% ermittelt. Der Pfropfgrad bezieht sich hierbei auf das Massen-Verhältnis von Pfropfkern zu der Summe aus Pfropfkern und Pfropfhülle:

$$\text{Pfropfgrad [\%]} = \frac{m(\text{Pfropfhülle}) * 100}{(m(\text{Pfropfgrundlage})+m(\text{Pfropfhülle}))}.$$

Die mittlere Teilchengröße der Latexteilchen B betrug 560 nm.

Beispiel 3 (Herstellung der thermoplastischen Formmasse)

Ein handelsübliches SAN-Copolymer mit 67 Gew.-% Styrol und 33 Gew.-% AN und einer Molmasse im Bereich (Mw) von 160.000 g/Mol wurde in den nachfolgenden Experimenten als Komponente A eingesetzt.

Als Komponente B wurde das in Beispiel 2 hergestellte Pfropf-Mischcopolymer eingesetzt. Es zeigten sich für die hergestellten Formmassen dann verbesserte mechanische Eigenschaften, wenn der AN-Gehalt der Pfropfhülle B3 von Komponente B mindestens 8 Gew.-% kleiner war als in der SAN-Matrix A, z. B. etwa 22 Gew.-% betrug.

Die mechanischen Eigenschaften der Formteile (aus den Formmassen) sind auch dann besonders günstig, wenn der AN-Gehalt in der Pfropfhülle B3 eine Verteilung (von außen nach innen bei den Partikeln) von z. B. 12 bis 24 Gew.-% aufweist, also der der Pfropfgrundlage B1 fernere Teil der Pfropfhülle B3 einen höheren AN-Gehalt und der der Pfropfgrundlage B1 nähere Teil der Pfropfhülle einen niedrigeren AN-Gehalt (z.B. 12 Gew.-%) aufweist.

Dies kann beim Herstellungsverfahren der Komponente B dadurch erreicht werden, dass das bei der ersten Pfropfreaktion auf der Pfropfgrundlage B1 eingesetzte Styrol (Styrol 1) nicht vollständig abreagiert wird (durch niedrige Temperatur (< 65 °C, insbesondere 60 bis 63°C) und kurze Nachpolymerisation (< 30 min)) bevor dann in der zweiten Pfropfreaktion die Mischung Styrol/Acrylnitril (Styrol 2 / AN) zugegeben wird.

Die mechanischen Eigenschaften der Formmassen, bzw. der daraus gewonnenen Formkörper, sind auch dann besonders günstig, wenn neben dem grobteiligen Pfropfmischcopolymer (B) und der SAN-Matrix (A) auch noch ein kleinteiliges Pfropfmischcopolymer (B') eingesetzt wird.

Die Struktur des Pfropf-Mischcopolymers B und die der Zwischenprodukte der Herstellung kann Mittels NMR und IR untersucht werden. Die erste Pfropfstufe der Herstellung (Pfropfbasis und 1. Stufe nur mit Styrol → Zwischenprodukt:

S1) enthält noch gewisse Mengen an Styrol. Aus der nachstehenden Tabelle wird ersichtlich, dass der Styrolumsatz nach 90 min. erst bei 38,5 Gew.-% liegt, so dass weiteres Styrolmonomer vorhanden ist. Kleinere verfügbare Mengen an Styrol (z.B. bis 10 Gew.-% (bezogen auf B)) können im Herstellungsverfahren einen Vorteil bieten, da für die zweite Pfropfhülle ein "erhöhter Styrolanteil" bereit steht.

Dieses Zwischenprodukt fällt im normalen Herstellungsprozess nicht an, da dieses Zwischenprodukt "in situ" mit Styrol und Acrylnitril (2. Stufe der Pfropfreaktion) direkt in das Endprodukt B (grobteiliges Pfropfmischpolymerisat) überführt wird. Das Zwischenprodukt lässt sich jedoch isolieren und charakterisieren. Zur Bestimmung der löslichen Polystyrol (PS) Anteile wurde das Zwischenprodukt (S1) analog zum Endprodukt ausgefällt und bei 60°C im Vakuum getrocknet. Anschließend wurde der erhaltene Kautschuk zweimal mit Aceton gewaschen und auf diese Weise die löslichen PS Anteile abgetrennt. Mittels NMR- (T2 Messung bei 30°C) und IR- (ATR-Technik) Messungen konnten durch vergleichende Messung des gewaschenen/ungewaschenen Zwischenprodukts (S1) die löslichen Mengen (Gew.%) an PS (bezogen auf S1) wie folgt bestimmt werden:

| Probe | IR [%] | NMR [%] |
|---|---|---|
| Ungewaschen | 15,9 | 17,5 |
| Gewaschen | 13,0 | 13,5 |

Damit ergibt sich eine lösliche PS Menge von 3.0-4.0 Gew.-%, bezogen auf die gesamt Kautschukmenge (S1), was etwa 20-30 Gew.-% bezogen auf die eingesetzte Styrol-Menge bedeutet. Im Herstellungsverfahren bedeutet dies einen technischen Vorteil, da bei der weiteren Umsetzung (zweite Pfropfhülle) ein "erhöhter Styrolanteil" zur Verfügung steht.

Die Monomerkonzentrationen können auch mittels Chromatographie (GC) während der zweistufigen Pfropfung bestimmt werden. Es ergaben sich z. B. folgende Acrylnitril-Gehalte (1.Stufe: S1; 2. Stufe: S2) in Abhängigkeit der Zeit nach Beginn der ersten Pfropf-polymerisation:

|  | Zeitpunkt | Styrol | AN | AN in SAN |
|---|---|---|---|---|
|  | [min] | Umsatz [%] |  | [wt%] |
| Styrol 1 | 0 | 0 | 0 | 0 |
|  | 30 | 30.3 | 0 | 0 |
|  | 60 | 28.5 | 0 | 0 |
|  | 90 | 38.5 | 0 | 0 |
| Styrol 2 / AN | 150 | 78.9 | 74.3 | 15.9 |
|  | 210 | 85.4 | 75.5 | 17.9 |
|  | 270 | 95.5 | 91.1 | 18.7 |
|  | 330 | 97.4 | 95.4 | 19.0 |

Der AN-Gehalt (Gew.-%, bestimmt mittels Gradient Polymer Elution Chromatography (GPEC)) in der Pfropfhülle des grobteiligen Pfropfmischpolymers (B) zeigt eine breite AN-Verteilung. Probenentnahme erfolgten nach 0, 30, 60, 90, 150, 210, 270, 330 Minuten während der Pfropfung. Der AN-Gehalt wächst von 0% (30 - 90 min) über -16% (max. nach 150 min) auf ~ 19% (max. nach 330 min) an. Es können auch ~ 21% erreicht werden.

Beispiel 4

Es wird eine Formmasse durch Extrudieren von 70 Gew.-% der SAN-Komponente A und 30 Gew.-% des Pfropf-Mischcopolymers B hergestellt.

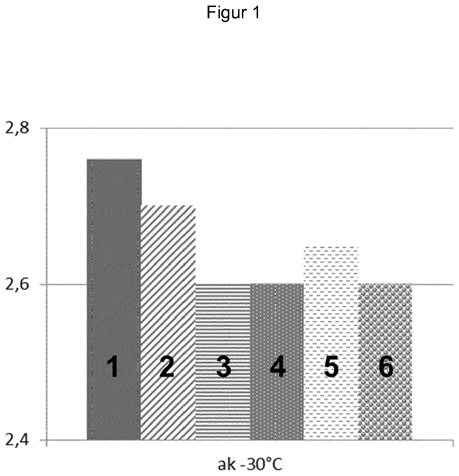

Figur 1 zeigt die Kerbschlagzähigkeit (ak) bei -30°C für die Formmassen (1, 2, 3, 4, 5 und 6), wobei verschieden hergestellte Pfropf-Mischcopolymere eingesetzt wurden, die sich hinsichtlich der Reaktionsbedingungen bei der ersten Pfropfung unterscheiden (Temperatur und Reaktionszeit bei der kontinuierlichen Zugabe von Styrol (S1, erste Pfropfhülle) sowie ggf. Nachpolymerisationszeit (NP). Die als linke Säule (1) dargestellte erfindungsgemäße Formmasse zeigt besonders hohe mechanische Stabilität, die anderen haben schlechtere Werte.

1. Säule: S1 über 1h bei 61°C + 25 min NP
2. Säule: S1 über 3h bei 65°C
3. Säule: S1 über 5 min bei 61 °C + 2:55h NP
4. Säule: S1 über 5 min bei 65°C + 2:55 h NP
5. Säule: S1 in Vorlage bei RT, Heizrampe über 3h auf 61°C
6. Säule: S1 in Vorlage bei RT, Heizrampe über 1h auf 65°C + 2h NP

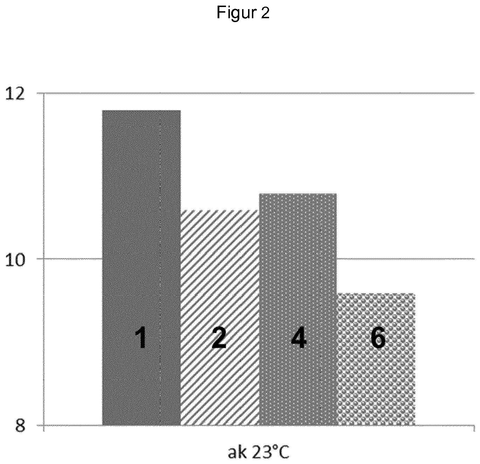

Figur 2 zeigt die Kerbschlagzähigkeit (ak) bei 23°C für die Formmassen, wobei verschieden hergestellte Pfropf-Mischcopolymere eingesetzt wurden, die sich hinsichtlich der Reaktionsbedingungen bei der ersten Pfropfung unterscheiden. Erneut führt bei Säule (1) eine niedrige Temperatur (61°C) und eine kurze Reaktionszeit (60 + 25 Minuten) zu verbesserten Eigenschaften.

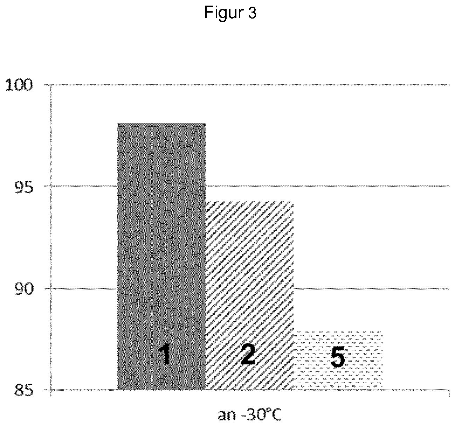

Figur 3 zeigt die Schlagzähigkeit (an) bei -30°C für die Formmassen, wobei verschieden hergestellte Pfropf-Mischcopolymere eingesetzt wurden, die sich hinsichtlich der Reaktionsbedingungen bei der ersten Pfropfung unterscheiden. Erneut führt bei Säule (1) eine niedrige Temperatur (61°C) und eine kurze Reaktionszeit (60 + 25 Minuten) zu verbesserten Eigenschaften.

Beispiel 5

Es wird eine Formmasse durch Extrudieren von 70 Gew.-% der SAN-Komponente A und 10 Gew.-% des Pfropf-Mischcopolymers B sowie 20 Gew.-% eines kleinteiligeren Pfropf-Mischcopolymers B' (nur mit einer Pfropfhülle) hergestellt.

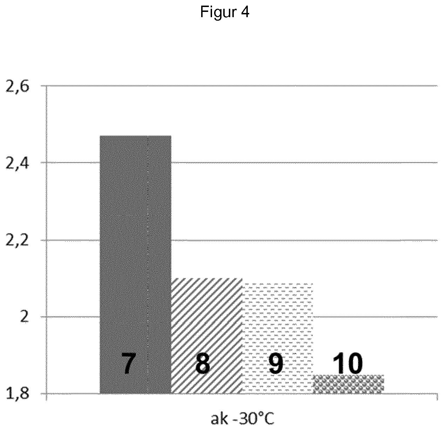

Figur 4 zeigt die Kerbschlagzähigkeit (ak) bei -30°C für die Formmassen (7, 8, 9 und 10), wobei verschieden hergestellte Pfropf-Mischcopolymere eingesetzt wurden, die sich hinsichtlich der Reaktionsbedingungen bei der ersten Pfropfung unterscheiden (Temperatur und Reaktionszeit bei der kontinuierlichen Zugabe von Styrol (S1, erste Pfropfhülle) sowie ggf. Nachpolymerisationszeit (NP). Die als linke Säule (7) dargestellte erfindungsgemäße Formmasse zeigt besonders hohe mechanische Stabilität, die anderen haben schlechtere Werte.

    7. Säule: S1 über 1h bei 61°C + 25 min NP
    8. Säule: S1 über 3h bei 65°C
    9. Säule: S1 über 5 min bei 65°C + 2:55h NP
    10. Säule: S1 in Vorlage bei RT, Heizrampe über 1h auf 65°C + 2h NP

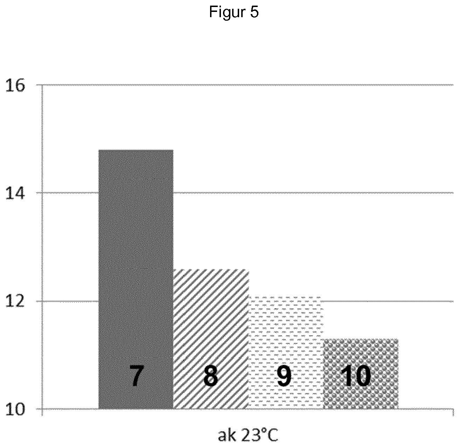

Figur 5 zeigt die Kerbschlagzähigkeit (ak) bei 23°C für die Formmassen (7, 8, 9 und 10), wobei verschieden hergestellte Pfropf-Mischcopolymere eingesetzt wurden, die sich hinsichtlich der Reaktionsbedingungen bei der ersten Pfropfung unterscheiden.

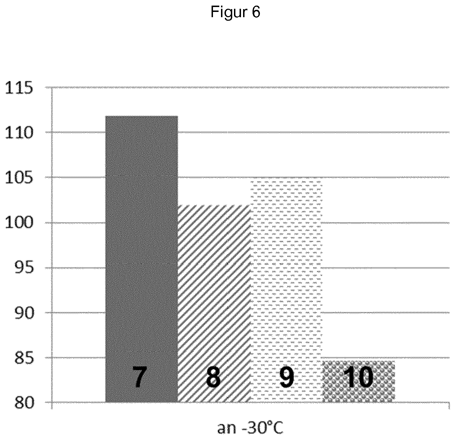

Figur 6 zeigt die Schlagzähigkeit (an) bei -30°C für die Formmassen (7, 8, 9 und 10), wobei verschieden hergestellte Pfropf-Mischcopolymere eingesetzt wurden, die sich hinsichtlich der Reaktionsbedingungen bei der ersten Pfropfung unterscheiden.

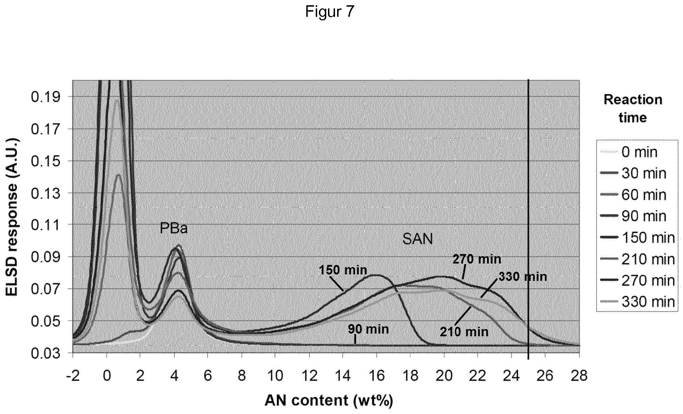

Figur 7 zeigt ein Diagramm mit der Bestimmung des AN-Gehalt in der Pfropfhülle (bestimmt mittels GPEC) von 0 bis 330 Minuten nach Reaktionsbeginn. Man verwendet einen Lichtstreudetektor (ELSD, Evaporative Light Scattering Detector) wie in der Flüssigchromatographie üblich. Die einzelnen eluierten Komponenten werden in einem Strom von Inert-Gas zerstäubt. Dabei bilden sich kleine Tröpfchen, die anschließend in einer Heizwendel verdampft werden. Dadurch entstehen feine Feststoffpartikel, die durch einen Laser driften. Durch die Partikel wird der Strahl in-elastisch gestreut, wobei eine Fotodiode die Abnahme der Lichtintensität registriert. Als Ordinate ist in Fig. 7 die Intensität des Mess-Signals (ELSD) angegeben, als Abszisse der Acrylnitril-Gehalt (Gew.-%) aufgetragen. Die verschiedenen Zeitpunkte der Probenentnahme während der Reaktion werden durch die verschiedenen Kurven wiedergegeben.

Es zeigt sich, dass ein AN-Gehalt von 18 bis 24 Gew.-% in der zweiten Pfropfhülle besonders günstig erscheint.

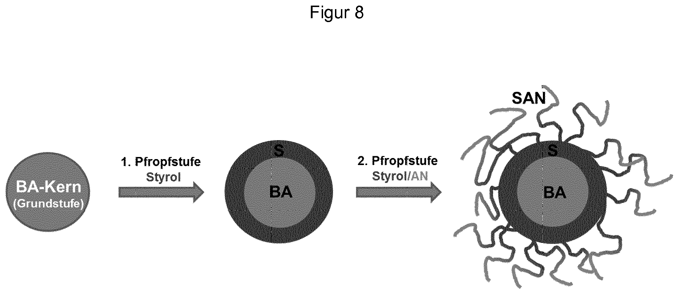

Figur 8 zeigt eine schematische Darstellung zur Verdeutlichung des zweistufigen Pfropfhüllen-Aufbaus auf einem Butylacrylat-Kern (BA) Die Übersicht zur 2-stufigen Pfropfung zeigt die erste Pfropfhülle aus Styrol (S) und die anschließende 2. Pfropfhülle aus Styrol und Acrylnitril.

**Patentansprüche**

**1.** Thermoplastische Formmasse, enthaltend:

55 bis 85 Gew.-% mindestens eines Copolymers A, aufgebaut aus Styrol und/oder $\alpha$-Methylstyrol A1 sowie aus Acrylnitril A2,
10 bis 40 Gew.-% mindestens eines Pfropf-Mischcopolymers B aufgebaut aus

B1: 50 bis 80, vorzugsweise 60 bis 70 Gew.-%, bezogen auf B, eines elastomeren, vernetzten Acrylester-Polymers B1 mit einem mittleren Teilchendurchmesser (Gewichtsmittel) im Bereich von 300 bis 700 nm als Pfropfgrundlage B1,
B2: einer ersten Pfropfhülle B2 aus 5 bis 30, vorzugsweise 10 bis 20 Gew.-%, bezogen auf B, eines vinylaromatischen Monomeren B21 und
B3: einer zweiten Pfropfhülle B3 aus 15 bis 40, vorzugsweise 20 bis 30 Gew.-%, bezogen auf B, einer Mischung aus vinylaromatischen Monomeren B31 und Nitril-Monomeren B32, wobei diese Monomeren B31 zu B32 in der Pfropfhülle B3 im Gewichtsverhältnis von 4 : 1 bis 3 : 2 vorliegen,

0 bis 30 Gew.-% mindestens eines kleinteiligen Pfropf-Mischcopolymers B' mit einem mittleren Teilchendurchmesser (Gewichtsmittel) von 80 bis 200 nm,
0 bis 5 Gew.-% an Zusatz- und/oder Hilfsstoffen C,

wobei sich der Gehalt an Nitril-Monomer (Baustein) in der Copolymer-Komponente A der thermoplastischen Formmasse und der Gehalt an Nitril-Monomer (Baustein) in der Pfropfhülle B3 um mindestens 8 Gew.-% unterscheiden.

**2.** Formmasse nach Anspruch 1, **dadurch gekennzeichnet, dass** das Pfropf-Mischcopolymer B ausgehend von einer Pfropfgrundlage B1 mit einem mittleren Teilchendurchmesser (Gewichtsmittel) im Bereich von 400 bis 600 nm, insbesondere von 440 bis 520 nm, hergestellt wird.

3. Formmasse nach Anspruch 1 oder 2, **dadurch gekennzeichnet, dass** das Pfropf-Mischcopolymer B aus:

60 bis 70 Gew.-% der Pfropfgrundlage B1 und
10 bis 20 Gew.-% der Pfropfhülle B2, vorzugsweise aus Styrol, sowie
20 bis 30 Gew.-% einer Pfropfhülle B3, bestehend aus B31 zu B32 im Gewichtsverhältnis von 78:22 bis 72:28
hergestellt wird.

4. Formmasse nach einem der Ansprüche 1 bis 3, **dadurch gekennzeichnet, dass** das Pfropf-Mischcopolymer B ausgehend von einer Pfropfgrundlage B1 mit einem Butylacrylatgehalt von > 90 Gew.-%, insbesondere 92 bis 99 Gew.-%, bezogen auf B1, hergestellt wird.

5. Formmasse nach einem der Ansprüche 1 bis 4, **dadurch gekennzeichnet, dass** das Pfropf-Mischcopolymer B ausgehend von

60 bis 70 Gew.-% der Pfropfgrundlage B1,
10 bis 20 Gew.-% Styrol B2 und
20 bis 30 Gew.-% einer Mischung B3 von Styrol und Acrylnitril im Gewichtsverhältnis 75:25 hergestellt wird.

6. Formmasse nach einem der Ansprüche 1 bis 5, **dadurch gekennzeichnet, dass** das mindestens eine Copolymer A aus Styrol A1 und Acrylnitril A2 im Gewichtsverhältnis (67:33) aufgebaut ist, und dass die Formmasse die Komponenten A und B in einem Gewichtsverhältnis von 85:15 bis 60:35 enthält.

7. Formmasse nach einem der Ansprüche 1 bis 6, **dadurch gekennzeichnet, dass** sie enthält: 55 bis 80 Gew.-% an Copolymeren A, 10 bis 40 Gew.-% an Pfropf-Mischcopolymer B sowie 0,2 bis 5 Gew.-% an üblichen Zusatz- und/oder Hilfsstoffen C.

8. Formmasse nach einem der Ansprüche 1 bis 7, **dadurch gekennzeichnet, dass** die Teilchengrößenverteilung der Pfropf-Grundlage B1 eng ist (vorzugsweise Q von 0,14 bis 0,2) und auch die Teilchengrößenverteilung des Pfropf-Mischcopolymers B eng ist (vorzugsweise Q von 0,14 bis 0,2).

9. Formmasse nach einem der Ansprüche 1 bis 8, **dadurch gekennzeichnet, dass** das Pfropf-Mischcopolymer B eine erste Pfropfhülle B2 aus Styrol und eine zweite Pfropfhülle B3 aus Styrol und Acrylnitril aufweist, wobei der Acrylnitril-Gehalt der Pfropfhülle B3 von 15 bis 25 Gew.-%, insbesondere 18 bis 23 Gew.-% (bezogen auf B3) beträgt.

10. Formmasse nach einem der Ansprüche 1 bis 9, **dadurch gekennzeichnet, dass** das mit zwei Pfropfhüllen (B2 und B3) ausgestattete Pfropf-Mischcopolymer B einen mittleren Teilchendurchmesser (Gewichtsmittel) im Bereich von 400 bis 600 nm, insbesondere von 500 bis 580 nm aufweist.

11. Verfahren zur Herstellung einer thermoplastischen Styrol-Copolymer Formmasse, **dadurch gekennzeichnet, dass** es folgende Verfahrensschritte beinhaltet:

a) ein Pfropf-Mischcopolymer B wird herstellt, in dem man folgende Schritte anwendet:

a1) als Pfropfgrundlage B1 wird ein elastomeres, vernetztes Acrylester-Polymer mit einem mittleren Teilchendurchmesser (Gewichtsmittel) im Bereich von 300 bis 700 nm eingesetzt,
a2) auf diese Pfropfgrundlage B1 wird durch Polymerisation eine erste Pfropfhülle B2 aus einem vinylaromatischen Monomeren B21 aufgebracht, wobei diese Reaktion durch kontinuierlichen Zusatz des Monomeren B21 bei einer Temperatur von unter 65° C erfolgt, und wobei dieser Schritt in einem Zeitraum von 45 bis 90 Minuten erfolgt,
a3) auf dem aus Schritt a2) erhaltenen Copolymer-Produkt wird durch Polymerisation eine zweite Pfropfhülle B3 aus einer Mischung aus vinylaromatischen Monomeren B31 und Nitril-Monomeren B32 aufgebracht, wobei die Monomeren B31 und B32 in der Pfropfhülle B3 in etwa im Gewichtsverhältnis von 3:1 vorliegen, wobei diese Reaktion durch kontinuierlichen Zusatz des Monomeren-Gemisches bei einer Temperatur von 60 bis 68° C erfolgt, und wobei dieser Schritt in einem Zeitraum von 120 bis 240 Minuten erfolgt,

b) das gewonnene Pfropf-Mischcopolymer B wird durch Fällung abgetrennt und einem Trocknungsschritt unterzogen,

c) das erhaltene Pfropf-Mischcopolymer B wird in einer Menge von 10 bis 40 Gew.-% mit 55 bis 85 Gew.-% mindestens eines Copolymers A, aufgebaut aus Styrol und/oder α-Methylstyrol A1 sowie aus Acrylnitril A2, wobei A1 und A2 im Copolymer A in etwa im Gewichtsverhältnis von 2:1 vorliegen, sowie ggf. mit 0 bis 5 Gew.-% an weiteren Zusatz- und/oder Hilfsstoffen C vermischt.

12. Verfahren zur Herstellung einer thermoplastische Styrol-Copolymer Formmasse gemäß Anspruch 11, **dadurch gekennzeichnet, dass** das Pfropf-Mischcopolymer B ausgehend von einer Pfropfgrundlage B1 aus Butylacrylat und Tricyclodecenylacrylat mit einem mittleren Teilchendurchmesser (Gewichtsmittel) im Bereich von 440 bis 520 nm hergestellt wird, dass die Pfropfhülle B2 aus Styrol besteht und die Pfropfhülle B3 aus Styrol und Acrylnitril im Gewichtsverhältnis von 76:24 bis 74:26 besteht, und dass das Copolymer A aufgebaut aus Styrol und Acrylnitril im Gewichtsverhältnis von 67:33.

13. Verwendung der Formmasse nach einem der Ansprüche 1 bis 10 zur Herstellung von Formkörpern, Folien oder Beschichtungen.

14. Formkörpern, Folien und Beschichtungen hergestellt aus einer Formmasse gemäß einem der Ansprüche 1 bis 10.

**Claims**

1. A thermoplastic molding composition comprising:

   from 55 to 85% by weight of at least one copolymer A composed of styrene and/or α-methylstyrene A1 and of acrylonitrile A2,
   from 10 to 40% by weight of at least one graft copolymer B composed of

   B1: from 50 to 80% by weight, preferably from 60 to 70% by weight, based on B, of an elastomeric, crosslinked acrylate polymer B1 with average particle diameter (weight average) in the range from 300 to 700 nm as graft base B1,
   B2: a first graft shell B2 made of from 5 to 30% by weight, preferably from 10 to 20% by weight, based on B, of a vinylaromatic monomer B21, and
   B3: a second graft shell B3 made of from 15 to 40% by weight, preferably from 20 to 30% by weight, based on B, of a mixture of vinylaromatic monomers B31 and nitrile monomers B32, where the ratio by weight of these monomers B31 to B32 in the graft shell B3 is from 4:1 to 3:2,

   from 0 to 30% by weight of at least one small-particle graft copolymer B' with average particle diameter (weight average) from 80 to 200 nm,
   from 0 to 5% by weight of additives and/or auxiliaries C,
   where the content of nitrile monomer (unit) in copolymer component A of the thermoplastic molding composition and the content of nitrile monomer (unit) in the graft shell B3 differ by at least 8% by weight.

2. The molding composition as claimed in claim 1, **characterized in that** the graft copolymer B is produced by starting from a graft base B1 with average particle diameter (weight average) in the range from 400 to 600 nm, in particular from 440 to 520 nm.

3. The molding composition as claimed in claim 1 or 2, **characterized in that** the graft copolymer B is produced from:

   from 60 to 70% by weight of the graft base B1, and
   from 10 to 20% by weight of the graft shell B2, preferably made of styrene, and also
   from 20 to 30% by weight of a graft shell B3 composed of B31 and B32 in a ratio by weight of from 78:22 to 72:28.

4. The molding composition as claimed in any of claims 1 to 3, **characterized in that** the graft copolymer B is produced by starting from a graft base B1 with butyl acrylate content > 90% by weight, in particular from 92 to 99% by weight, based on B1.

5. The molding composition as claimed in any of claims 1 to 4, **characterized in that** the graft copolymer B is produced by starting from from 60 to 70% by weight of the graft base B1,

from 10 to 20% by weight of styrene B2, and
from 20 to 30% by weight of a mixture B3 of styrene and acrylonitrile
in a ratio by weight of 75:25.

6.  The molding composition as claimed in any of claims 1 to 5, **characterized in that** the at least one copolymer A is composed of styrene A1 and acrylonitrile A2 in the ratio by weight 67:33, and that the molding composition comprises components A and B in a ratio by weight of from 85:15 to 60:35.

7.  The molding composition as claimed in any of claims 1 to 6, **characterized in that** it comprises: from 55 to 80% by weight of copolymers A, from 10 to 40% by weight of graft copolymer B, and also from 0.2 to 5% by weight of conventional additives and/or conventional auxiliaries C.

8.  The molding composition as claimed in any of claims 1 to 7, **characterized in that** the particle size distribution of the graft base B1 is narrow (Q preferably being from 0.14 to 0.2) and the particle size distribution of the graft copolymer B is also narrow (Q preferably being from 0.14 to 0.2).

9.  The molding composition as claimed in any of claims 1 to 8, **characterized in that** the graft copolymer B has a first graft shell B2 made of styrene and a second graft shell B3 made of styrene and acrylonitrile, where the acrylonitrile content of the graft shell B3 is from 15 to 25% by weight, in particular from 18 to 23% by weight (based on B3).

10. The molding composition as claimed in any of claims 1 to 9, **characterized in that** the average particle diameter (weight average) of the graft copolymer B equipped with two graft shells (B2 and B3) is in the range from 400 to 600 nm, in particular from 500 to 580 nm.

11. A process for the production of a thermoplastic styrene copolymer molding composition, **characterized in that** it includes the following steps:

   a) a graft copolymer B is produced by using the following steps:

   a1) an elastomeric, crosslinked acrylate polymer with average particle diameter (weight average) in the range from 300 to 700 nm is used as graft base B1,
   a2) a first graft shell B2 made of a vinylaromatic monomer B21 is applied by polymerization to said graft base B1, where this reaction takes place via continuous addition of the monomer B21 at a temperature below 65°C, and where this step takes place within a period of from 45 to 90 minutes,
   a3) a second graft shell B3 made of a mixture of vinylaromatic monomers B31 and nitrile monomers B32 is applied by polymerization on the copolymer product obtained from step a2), where the monomers B31 and B32 are present in a ratio by weight of about 3:1 in the graft shell B3, where this reaction takes place via continuous addition of the monomer mixture at a temperature of from 60 to 68°C, and where this step takes place within a period of from 120 to 240 minutes,

   b) the graft copolymer B obtained is isolated by precipitation and subjected to a drying step,
   c) a quantity of from 10 to 40% by weight of the graft copolymer B obtained is mixed with from 55 to 85% by weight of at least one copolymer A composed of styrene and/or $\alpha$-methylstyrene A1 and of acrylonitrile A2, where A1 and A2 are present in a ratio by weight of about 2:1 in the copolymer A, and optionally with from 0 to 5% by weight of other additives and/or auxiliaries C.

12. The process for the production of a thermoplastic styrene copolymer molding composition as claimed in claim 11, **characterized in that** the graft copolymer B is produced by starting from a graft base B1 made of butyl acrylate and tricyclodecenyl acrylate with average particle diameter (weight average) in the range from 440 to 520 nm, that the graft shell B2 is composed of styrene, and the graft shell B3 is composed of styrene and acrylonitrile in a ratio by weight of from 76:24 to 74:26, and that the copolymer A is composed of styrene and acrylonitrile in a ratio by weight of 67:33.

13. The use of the molding composition as claimed in any of claims 1 to 10 for the production of moldings, films, or coatings.

14. A molding, film, or coating produced from a molding composition as claimed in any of claims 1 to 10.

**Revendications**

1. Mélange à mouler thermoplastique, comprenant :

   55 à 85 % en poids d'au moins un copolymère A, constitué de styrène et/ou d'α-méthylstyrène A1, ainsi que d'acrylonitrile A2,
   10 à 40 % en poids d'au moins un copolymère greffé B, constitué

   B1 : de 50 à 80, de préférence de 60 à 70 % en poids, par rapport à B, d'un polymère d'ester acrylique réticulé élastomère B1 ayant une granulométrie moyenne (moyenne en poids) comprise dans la plage de 300 à 700 nm, en tant que base de greffage B1,
   B2 : d'une première enveloppe de greffage B2, constituée de 5 à 30, de préférence de 10 à 20 % en poids, par rapport à B, d'un monomère vinylaromatique B21, et
   B3 : d'une deuxième enveloppe de greffage B3, constituée de 15 à 40, de préférence de 20 à 30 % en poids, par rapport à B, d'un mélange de monomères vinylaromatiques B31 et de nitriles monomères B32, ces monomères B31 étant présents, par rapport à B32 dans l'enveloppe de greffage B3, selon un rapport en poids de 4:1 à 3:2,

   0 à 30 % en poids d'au moins un copolymère greffé B' à petite granulométrie, ayant une granulométrie moyenne (moyenne en poids) de 80 à 200 nm,
   0 à 5 % en poids d'additifs et/ou d'adjuvants C,

   dans lequel la teneur en le nitrile monomère (constituant) du composant copolymère A du mélange à mouler thermoplastique, et la teneur en nitrile monomère (constituant) de l'enveloppe de greffage B3, diffèrent d'au moins 8 % en poids.

2. Mélange à mouler selon la revendication 1, **caractérisé en ce que** le copolymère greffé B est fabriqué à partir d'une base de greffage B1 ayant une granulométrie moyenne (moyenne en poids) comprise dans la plage de 400 à 600 nm, en particulier de 440 à 520 nm.

3. Mélange à mouler selon la revendication 1 ou 2, **caractérisé en ce que** le copolymère greffé B est fabriqué à partir :

   de 60 à 70 % en poids de la base de greffage B1, et
   de 10 à 20 % en poids de l'enveloppe de greffage B2, de préférence constituée de styrène, ainsi que
   de 20 à 30 % en poids d'une enveloppe de greffage B3, constituée de B31 et de B32 selon un rapport en poids de 78:22 à 72:28.

4. Mélange à mouler selon l'une des revendications 1 à 3, **caractérisé en ce que** le copolymère greffé B est fabriqué à partir d'une base de greffage B1 ayant une teneur en acrylate de butyle > 90 % en poids, en particulier 92 à 99 % en poids, par rapport à B1.

5. Mélange à mouler selon l'une des revendications 1 à 4, **caractérisé en ce que** le copolymère greffé B est fabriqué à partir
   de 60 à 70 % en poids de la base de greffage B1,
   de 10 à 20 % en poids de styrène B2, et
   de 20 à 30 % en poids d'un mélange B3 de styrène et d'acrylonitrile selon un rapport en poids de 75:25.

6. Mélange à mouler selon l'une des revendications 1 à 5, **caractérisé en ce que** l'au moins un copolymère A est constitué de styrène A1 et d'acrylonitrile A2 selon un rapport en poids de 67:33, et que le mélange à mouler contient les composants A et B selon un rapport en poids de 85:15 à 60:35.

7. Mélange à mouler selon l'une des revendications 1 à 6, **caractérisé en ce qu'**il contient 55 à 80 % en poids de copolymères A, 10 à 40 % en poids du copolymère greffé B, ainsi que 0,2 à 5 % en poids d'additifs et/ou d'adjuvants C usuels.

8. Mélange à mouler selon l'une des revendications 1 à 7, **caractérisé en ce que** la distribution granulométrique de la base de greffage B1 est étroite (de préférence Q de 0,14 à 0,2), et que même la distribution granulométrique du copolymère greffé B est étroite (de préférence Q de 0,14 à 0,2).

**9.** Mélange à mouler selon l'une des revendications 1 à 8, **caractérisé en ce que** le copolymère greffé B présente une première enveloppe de greffage B2 constituée de styrène et une deuxième enveloppe de greffage B3 constituée de styrène et d'acrylonitrile, la teneur en acrylonitrile de l'enveloppe de greffage B3 étant de 15 à 25 % en poids, en particulier de 18 à 23 % en poids (par rapport à B3).

**10.** Mélange à mouler selon l'une des revendications 1 à 9, **caractérisé en ce que** le copolymère greffé B, muni de deux enveloppes de greffage (B2 et B3), présente une granulométrie moyenne (moyenne en poids) comprise dans la plage de 400 à 600 nm, en particulier de 500 à 580 nm.

**11.** Procédé de fabrication d'un mélange à mouler d'un copolymère thermoplastique du styrène, **caractérisé en ce qu'**il comprend les étapes de procédé suivantes :

a) on fabrique un copolymère greffé B, par utilisation des étapes suivantes :

a1) en tant que base de greffage B1, on utilise un polymère d'un ester acrylique réticulé élastomère, ayant une granulométrie moyenne (moyenne en poids) comprise dans la plage de 300 à 700 nm,
a2) sur cette base de greffage B1, on applique par polymérisation une première enveloppe de greffage B2 constituée d'un monomère vinylaromatique B21, cette réaction étant mise en oeuvre par addition continue du monomère B21 à une température inférieure à 65°C, cette étape étant mise en oeuvre pendant un laps de temps de 45 à 90 minutes,
a3) sur le produit copolymère obtenu dans l'étape a2), on applique par polymérisation une deuxième enveloppe de greffage B3 constituée d'un mélange de monomères vinylaromatiques B31 et de nitriles monomères B32, les monomères B31 et B32 étant présents dans l'enveloppe de greffage B3 approximativement selon un rapport en poids de 3:1, cette réaction étant mise en oeuvre par addition continue du mélange de monomères à une température de 60 à 68°C, cette étape étant mise en oeuvre pendant un laps de temps de 120 à 240 minutes,

b) par précipitation, on sépare le copolymère greffé B obtenu, et on le soumet à une étape de séchage,
c) on mélange le copolymère greffé B obtenu, en une quantité de 10 à 40 % en poids, à 55 à 85 % en poids d'au moins un copolymère A, constitué de styrène et/ou d'α-méthylstyrène A1, ainsi que d'acrylonitrile A2, A1 et A2 étant présents dans le copolymère A approximativement selon un rapport en poids de 2:1, ainsi qu'éventuellement à 0 à 5 % en poids d'autres additifs et/ou adjuvants C.

**12.** Procédé de fabrication d'un mélange à mouler d'un copolymère thermoplastique du styrène selon la revendication 11, **caractérisé en ce que** le copolymère greffé B est fabriqué à partir d'une base de greffage B1 constituée d'acrylate de butyle et d'acrylate de tricyclodécényle, ayant une granulométrie moyenne (moyenne en poids) comprise dans la plage de 440 à 520 nm, que l'enveloppe de greffage B2 est constituée de styrène et l'enveloppe de greffage B3 est constituée de styrène et d'acrylonitrile selon un rapport en poids de 76:24 à 74:26, et que le copolymère A est constitué de styrène et d'acrylonitrile selon un rapport en poids de 67:33.

**13.** Utilisation du mélange à mouler selon l'une des revendications 1 à 10 pour fabriquer des objets moulés, des feuilles ou des revêtements.

**14.** Objets moulés, feuilles et revêtements, fabriqués à partir d'un mélange à mouler selon l'une des revendications 1 à 10.

Figur 1

Figur 2

Figur 3

Figur 4

Figur 5

Figur 6

Figur 7

Figur 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20110275763 A
- EP 0450485 A
- DE 19813149358
- WO 2007142473 A
- DE 1260135 A
- DE 2311129 A
- EP 0535456 A

- DE 4006643 A
- DE 3149358 A
- DE 3227555 A
- DE 4006643
- DE 4131729
- EP 698637 A
- EP 669367 A

**In der Beschreibung aufgeführte Nicht-Patentliteratur**

- Kunststoff-Handbuch. Carl-Hanser-Verlag, 1969, vol. 124, 12 ff

- **DE VON W. SCHOLTAN ; H. LANGE.** *Kolloid-Z. and Z. Polymere,* 1972, vol. 250, 782-796